# EUROPÄISCHE PATENTSCHRIFT

(11) **EP 2 049 284 B1**
(45) Veröffentlichungstag und Bekanntmachung des Hinweises auf die Patenterteilung: **29.09.2010**
(21) Anmeldenummer: 07764901.0
(22) Anmeldetag: 28.06.2007
(51) Int. Cl.: B21D 53/90, B60B 35/08, B60G 9/00

(54) **ACHSAGGREGAT**
AXLE UNIT
ENSEMBLE D'ESSIEU

(30) Priorität: 09.08.2006 DE 102006037356
(43) Veröffentlichungstag der Anmeldung: 22.04.2009
(73) Patentinhaber: SAF-HOLLAND GmbH, 63856 Bessenbach-Keilberg (DE)
(72) Erfinder: KOSCHINAT, Hubert, 63768 Hösbach (DE)
(74) Vertreter: Bauer, Clemens
(86) Internationale Anmeldenummer: PCT/EP2007/005710
(87) Internationale Veröffentlichungsnummer: WO 2008/017351

(56) Entgegenhaltungen:
- WO-A-97/42047
- DE-A1- 10 053 411
- DE-A1- 10 118 523
- DE-A1- 10 140 856
- DE-C1- 19 638 082
- US-A1- 2005 168 057

## Beschreibung

Die Erfindung betrifft ein Achsaggregat mit einer einen starren, z.B. als Achsrohr ausgebildeten Achskörper aufweisenden Fahrzeugachse, mit je einem Führungslenker beidseits der Fahrzeuglängsmittelebene, welcher an einem ersten vorderen Ende an einem chassisfesten Lagerpunkt anlenkbar und davon beabstandet starr mit dem Achskörper verbunden ist, und welcher im Bereich seines dem vorderen Ende gegenüberliegenden hinteren Endes das untere Auflager eines Federelements bildet, auf dessen Oberseite sich das Fahrzeugchassis abstützt, wobei der Achskörper und die beiden Führungslenker gemeinsam aus zwei jeweils im Wesentlichen einstückigen und miteinander entlang einer z.B. im Wesentlichen horizontalen Ebene verlaufenden Trennfuge verbundenen, insbesondere verschweißten, Formteilhälften gebildet sind, so dass der Achskörper die beiden Führungslenker starr miteinander verbindet.

Ein derartiges Achsaggregat ist beispielsweise aus der DE 101 18 523 A1 oder aus der DE 100 53 411 A1 bekannt. Derartige aus zwei schalenartigen Formteilhälften aufgebaute Achsaggregate weisen den Vorteil auf, dass der Herstellungs- und Montageaufwand sowie das Gewicht bei geringen Fertigungskosten reduziert werden können. Allerdings hat es sich in einigen Anwendungsfällen herausgestellt, dass bei hohen im Betrieb auftretenden Belastungen des Achsaggregates insbesondere in dem Verbindungsbereich zwischen dem Achsrohr und den Führungslenkern sehr große Materialbeanspruchungen auftreten.

Es ist daher eine Aufgabe der vorliegenden Erfindung, ein Achsaggregat der eingangs genannten Art so weiterzubilden, dass die Zuverlässigkeit und Stabilität des Achsaggregates weiter verbessert wird, ohne den Herstellungs- und Montageaufwand nennenswert zu erhöhen.

Diese Aufgabe wird erfindungsgemäß bei einem Achsaggregat der eingangs genannten Art dadurch gelöst, dass der Achskörper zumindest in den Verbindungsbereichen des Achskörpers mit den beiden Führungslenkern durch wenigstens ein zusätzliches Versteifungselement versteift ist. Diese Ausgestaltung des Achsaggregates aus vergleichsweise dünnen Formteilhälften und einer definierten zusätzlichen Versteifung in den am höchsten beanspruchten Bereichen ermöglicht es, ein besonders zuverlässiges Achsaggregat mit minimiertem Gewicht bereitzustellen.

Nach einer ersten Ausführungsform der Erfindung ist das wenigstens eine Versteifungselement durch ein Rohr gebildet, welches in einen durch die beiden Formteilhälften gebildeten Hohlraum eingesteckt ist. Bei der Ausbildung des Achsaggregates mit einem z.B. innen zylindrischen Achsrohr bietet es sich an, in dieses ein außen zylindrisches Rohr zur Versteifung einzuführen. Es ist jedoch auch möglich, dass das Versteifungselement einen nicht kreisförmigen Querschnitt aufweist, insbesondere einen in Bezug auf die auftretenden Beanspruchungen optimierten Querschnitt.

Der Bereich des Achsrohres zwischen den beiden Führungslenkern wird im Betrieb unter anderem einer hohen Biegebeanspruchung unterworfen. Es wird daher in einigen Anwendungsfällen bevorzugt, wenn dieser mittlere Bereich des Achsrohres einen größeren Querschnitt aufweist als die seitlichen äußeren Enden des Achsrohres, an welchen die Achsstummel vorgesehen sein können. Bei einer derartigen Ausbildung des Achsrohres ist das als Versteifungselement dienende Rohr vorzugsweise als ein sich von der Außenseite des Achsrohres in Richtung zu der Mitte des Achsrohres zumindest bereichsweise konisch aufweisendes Rohr ausgebildet.

Nach einer weiteren Ausführungsform der Erfindung ist das wenigstens eine Versteifungselement durch eine rohrartige Verlängerung der Achsstummel gebildet. Nach dem Zusammenfügen der beiden Formteilhälften zur Bildung des Achsaggregates müssen somit lediglich die verlängerten Achsstummel eingesetzt werden, ohne dass zusätzliche aufwendige Versteifungsmaßnahmen erforderlich wären.

In Weiterbildung des Erfindungsgedankens ist es vorgesehen, dass das wenigstens eine Versteifungselement zumindest bereichsweise flächig an der Innenwand der beiden Formteilhälften anliegt. So kann das Versteifungselement ggf. mit dem durch die beiden Formteilhälften gebildeten Achsaggregat verklemmt oder verspannt sein. Alternativ oder zusätzlich hierzu ist es auch möglich, das wenigstens eine Versteifungselement zumindest bereichsweise mit den beiden Formteilhälften zu verschweißen. Das Versteifungselement kann dabei entweder als ein durchgehendes, in das Achsrohr eingeschobenes Versteifungselement ausgebildet sein oder es können insbesondere in dem Verbindungsbereich zwischen den Führungslenkern und dem Achsrohr voneinander getrennte Versteifungselemente vorgesehen sein.

Nach einer weiteren Ausführungsform der Erfindung ist das wenigstens eine Versteifungselement innen in dem durch die beiden Formteilhälften gebildeten Achsaggregat verspannt. Hierzu ist es vorgesehen, dass der seitliche Endabschnitt des Achsrohres innen zylindrisch ausgebildet, das insbesondere als Achsstummel ausgebildete Versteifungselement mit einem außen entsprechend zylindrischen Verbindungsabschnitt in den Endabschnitt des Achsrohres eingepasst und der Endabschnitt des Achsrohres mit dem Verbindungsabschnitt des Versteifungselements mittels wenigstens eines Klemmstücks, welches mittels eines Gewindebolzens in axialer Richtung zum Ende des Achsrohres verstellbar ist, radial verspannbar ist.

Alternativ hierzu ist es auch möglich, eine Außenverspannung zwischen dem Achsaggregat und dem wenigstens einen Versteifungselement vorzusehen. In diesem Fall ist der seitliche Endabschnitt des Achsrohres innen zylindrisch und mit wenigstens einem Längsschlitz ausgebildet, wobei das insbesondere als Achsstummel ausgebildete Versteifungselement mit einem außen entsprechend zylindrischen Verbindungsabschnitt in den Endabschnitt des Achsrohres eingepasst und der Endabschnitt des Achsrohres mit dem Verbindungsabschnitt des Versteifungselements mittels wenigstens eines auf dem Endabschnitt des Achsrohres sitzenden, in Längsrichtung durchgehend geschlitzten Spannringes radial verspannbar ist.

Nach einer weiteren bevorzugten Ausführungsform der Erfindung ist das wenigstens eine Versteifungselement durch eine Rippe gebildet, welche in einem durch die beiden Formteilhälften gebildeten Hohlraum angeordnet und insbesondere mit den Formteilhälften verschweißt ist. Durch die Ausbildung von rippenartigen Versteifungselementen kann eine weitere Gewichtseinsparung erreicht werden, wenn die Rippen entsprechend der auftretenden Belastungen ausgelegt und in dem Achsaggregat angeordnet werden.

In Weiterbildung dieses Erfindungsgedankens wird es bevorzugt, dass wenigstens zwei Versteifungselemente vorgesehen sind, die jeweils durch wenigstens zwei zumindest näherungsweise rechtwinklig zueinander verlaufende Rippen gebildet sind. Dabei kann eine der Rippen zumindest näherungsweise in einer Ebene mit der Längsachse eines Führungslenkers und eine weitere Rippe zumindest näherungsweise in einer Ebene mit der Achse des Achsrohres liegen. Die Versteifungselemente sind damit in dem im Betrieb am höchsten beanspruchten Bereich der Verbindung zwischen den Führungslenkern und dem Achsrohr vorgesehen.

In einigen Anwendungsfällen wird es bevorzugt, wenn in dem Achsaggregat Durchgangsöffnungen bspw. zur Aufnahme von Funktionselementen einer Bremsanlage vorgesehen sind. Diese Durchgangsöffnungen erlauben die Unterbringung von Funktionselementen, ohne den Bauraum im Bereich der Radaufhängung unnötig zu vergrößern. Die Stabilität des Achsaggregats kann dabei gesteigert werden, indem in die Durchgangsöffnung eine ringförmige Wandung eingesetzt und mit den Formteilhälften verschweißt ist.

Die schalenartige Formteilhälften lassen sich mit geeigneten Press- oder Schmiedevorrichtungen mit geringem Aufwand in großen Stückzahlen aus Blech kostengünstig herstellen. Ein Verspannen oder Verschweißen gesonderter Führungslenker z.B. mit dem Achskörper und auch das arbeitsintensive Zusammenfügen der Führungslenker aus mehreren Wandelementen kann entfallen. Eine Schweißung ist ggf. zum Fixieren der Versteifungselemente und weiter lediglich zum Verbinden der beiden Formteilhälften im Bereich der z. B. im Wesentlichen horizontal verlaufenden Trennfuge erforderlich, in welcher die Belastungen geringer sind. Zudem ermöglicht das Formpressen der Formteilhälften eine gewichts- und belastungsoptimierte Wandstärkenverteilung in dem Achsaggregat. So ist es beispielsweise möglich, in dem hochbelasteten Bereich der Verbindung der Führungslenker mit dem Achskörper die Materialstärke zu erhöhen und in weniger belasteten Bereichen entsprechend zu verringern. Das erfindungsgemäße Achsaggregat erhält dadurch eine hohe Steifigkeit bei gleichzeitig niedrigem Gewicht.

Die Steifigkeit des Achsaggregats ist bei geringem Gewicht dadurch weiter gesteigert, wenn die beiden Formteilhälften miteinander verbunden einen Hohlraum zwischen sich bilden. Biege- und Torsionsmomente, die auf das Achsaggregat wirken, lassen sich bei dieser Kastenbauweise besonders gut auffangen.

Werden an den vorderen Enden der Führungslenker jeweils eine Lagermuffe zur Verbindung der Führungslenker mit dem Fahrzeugchassis ausgebildet oder angebracht, ist es möglich individuell auf das Fahrzeugchassis abgestimmte Lagermuffen bei gleichbleibender Geometrie des Achsaggregats einzusetzen. Weiter lassen sich auf diese Weise auch unterschiedliche Werkstoffe für die Lagermuffen und die Formteilhälften verwenden, beispielsweise Lagermuffen aus Kupferlegierungen. Die Lagermuffen können durch eine Schweißverbindung besonders einfach und haltbar an den Führungslenkern befestigt sein, wodurch gleichzeitig die Stabilität des Achsaggregats weiter erhöht wird.

Das erfindungsgemäße Achsaggregat ist bei verschiedenen Fahrzeugchassistypen einsetzbar, wenn an den hinteren Enden der Führungslenker jeweils mehrere im Wesentlichen senkrecht zu der Ebene der Trennfuge verlaufende Durchgangsbohrungen vorgesehen sind, um Federelemente an den Führungslenkern zu befestigen. In Abhängigkeit der Größe der Federelemente, die vorzugsweise durch je einen Luftfederbalg gebildet sind, und der Geometrie des Fahrzeugchassis werden die Federelemente in unterschiedlichen Durchgangsbohrungen über beispielsweise einen Gewindezapfen befestigt. Durch die breite Verwendbarkeit des Achsaggregats bei unterschiedlichen Fahrzeugchassistypen können die Fertigungskosten und insbesondere die Kosten für die Formwerkzeuge der Formteilhälften gering gehalten werden. Die Stoßdämpferanbindung kann in an sich bekannter Weise erfolgen.

Zur Verbindung von Rädern mit dem Achsaggregat ist vorzugsweise in beiden Seitenöffnungen des Achskörpers jeweils ein Achszapfen starr befestigt. Dieser Achszapfen kann beispielsweise in den als Achsrohr ausgebildeten Achskörper eingepresst und ggf. mit diesem verschweißt oder in sonstiger Weise mit dem Achsaggregat verbunden werden. Auf diese Weise ist es möglich, unterschiedlich dimensionierte Achszapfen bei gleicher Achsaggregatsgeometrie einzusetzen.

Nach einer anderen Ausführungsform der Erfindung sind in beiden Seitenöffnungen des Achskörpers Wälzlager vorgesehen. Die Räder können bei dieser Ausführungsform über eine Verlängerung der Radnabe in der Lagereinheit in dem Achskörper aufgenommen werden. Auch bei dieser Ausgestaltung des Achsaggregats ist die Gestaltung der Räder oder der Bremse weitgehend unabhängig von der Geometrie des Achsaggregats, so dass dieses variabel für unterschiedliche Fahrzeugtypen einsetzbar ist.

Im Folgenden wird eine Ausführungsform der Erfindung beispielhaft und unter Bezugnahme auf die Zeichnung näher erläutert.

Es zeigen:
- Fig. 1: in teilweise geschnittener Draufsicht ein Achsaggregat nach einer ersten Ausführungsform der Erfindung,
- Fig. 2: in Seitenansicht das Achsaggregat nach Fig. 1,
- Fig. 3: in teilweise geschnittener Draufsicht ein Achsaggregat nach einer zweiten Ausführungsform der Erfindung,
- Fig. 4: in teilweise geschnittener Draufsicht ein Achsaggregat nach einer dritten Ausführungsform der Erfindung,
- Fig. 5: in teilweise geschnittener Draufsicht ein Achsaggregat nach einer vierten Ausführungsform der Erfindung und
- Fig. 6: einen Schnitt durch die Formteilhälften des Achsaggregats nach Fig. 5.

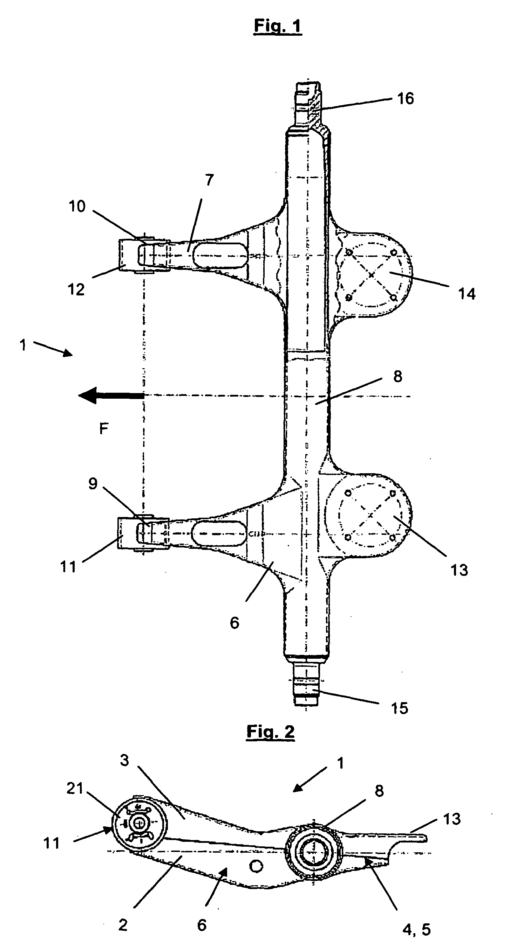

Die in den Figuren 1, 3, 4 und 5 dargestellten Ausführungsformen sind in Bezug auf den grundlegenden Aufbau des Achsaggregats 1 im Wesentlichen gleich. Dabei ist das Achsaggregat 1 aus einer unteren Formteilhälfte 2 und einer oberen Formteilhälfte 3 zusammengesetzt. Entlang einer im Wesentlichen horizontal verlaufenden Trennfuge 4 sind die beiden Formteilhälften 2 und 3 miteinander über eine Schweißung 5 verbunden und definieren zwischen sich einen Hohlraum. Die beiden Formteilhälften 2 und 3 sind jeweils aus Blech gepresste oder geschmiedete Profile, die eine Wandstärke von einigen Zentimetern, beispielsweise etwa 5 mm aufweisen können.

Jede der Formteilhälften 2 und 3 ist H-förmig ausgebildet mit zwei im Wesentlichen zueinander parallelen Führungslenkerhälften. Die Führungslenkerhälften sind jeweils über Achskörperhälften miteinander einstückig so verbunden, dass die Achskörperhälften annähernd senkrecht zu den Führungslenkerhälften verlaufen. Die Führungslenkerhälften bilden zusammengesetzt jeweils Führungslenker 6 bzw. 7, in deren mittleren Bereich der aus den Achskörperhälften zusammengesetzte Achskörper 8 in Form eines Achsrohres abzweigt. In der gezeigten Ausführungsform weist das Achsrohr 8 einen Durchmesser von etwa 200 mm auf.

Das jeweils in der durch Pfeil F gekennzeichneten Fahrtrichtung vordere Ende 9 bzw. 10 der Führungslenker 6 und 7 ist an einem Lagerpunkt am Fahrzeugchassis (in der Figur nicht dargestellt) anlenkbar. Hierzu ist in den vorderen Enden 9, 10 der Führungslenker 6, 7 jeweils eine Lagermuffe 11 bzw. 12 ausgebildet oder angeordnet. In der in der Figur dargestellten Ausführungsform weist hierzu das vordere Ende 9 bzw. 10 der Führungslenker 6 und 7 jeweils eine halbzylindrische Ausnehmung auf, in welche die ringförmige Lagermuffe 11 bzw. 12 umlaufend eingeschweißt ist. In die Lagermuffen 11 und 12 können innen beispielsweise elastische Lagerelemente 21, z. B. ein Gummi-Metallverbund, eingepresst sein, welche alle dort auftretenden Kräfte über Halteböcke in das Fahrzeugchassis leiten und für eine gezielte Abstimmung der Rollstabilität des Fahrzeugs sorgen.

In den bezüglich der Fahrtrichtung F hinteren abgeflachten Enden 13, 14 der Führungslenker 6, 7 sind Durchgangsbohrungen vorgesehen. Mittels Gewindezapfen können in jeweils einem oder mehreren der Durchgangsbohrungen Federelemente (nicht dargestellt) an den Führungslenkern 6 bzw. 7 befestigt werden, so dass die hinteren Enden 13, 14 der Führungslenker 6, 7 Auflager für diese Federelemente, wie beispielsweise einen Luftfederbalg, bilden, auf deren Oberseite sich dann seinerseits das Fahrzeugchassis abstützt.

In der in der Figur 1 dargestellten Ausführungsform sind in die beiden einander gegenüberliegenden Seitenöffnungen des Achskörpers 8 Achsstummel 15 und 16 aufgenommen und in der Achsrohröffnung verpresst und/oder verschweißt. Auf den Achsstummel 15 und 16 können in bekannter Weise jeweils ein oder mehrere Räder (nicht dargestellt) aufgenommen werden. Hierzu weisen die Achsstummel 15, 16 an ihren nach außen gewandten Enden jeweils Gewindeabschnitte auf. Bei dieser Ausführungsform weisen die Achsstummel 15, 16 eine gegenüber herkömmlichen Achsstummeln in axialer Richtung des Achsrohres vergrößerte Länge auf, so dass sich die rohrartigen Achsstummel 15, 16 bis über den Verbindungsbereich der Führungslenker 6, 7 mit dem Achsrohr 8 erstrecken. Die verlängerten Achsstummel 15, 16 dienen damit als ein Versteifungselement, welches flächig an der Innenwand des durch die beiden Formteilhälften 2, 3 gebildeten Achsaggregates anliegt und den im Betrieb besonders hoch beanspruchten Bereich, in welchem die Führungslenker 6, 7 in das Achsrohr 8 münden, verstärkt.

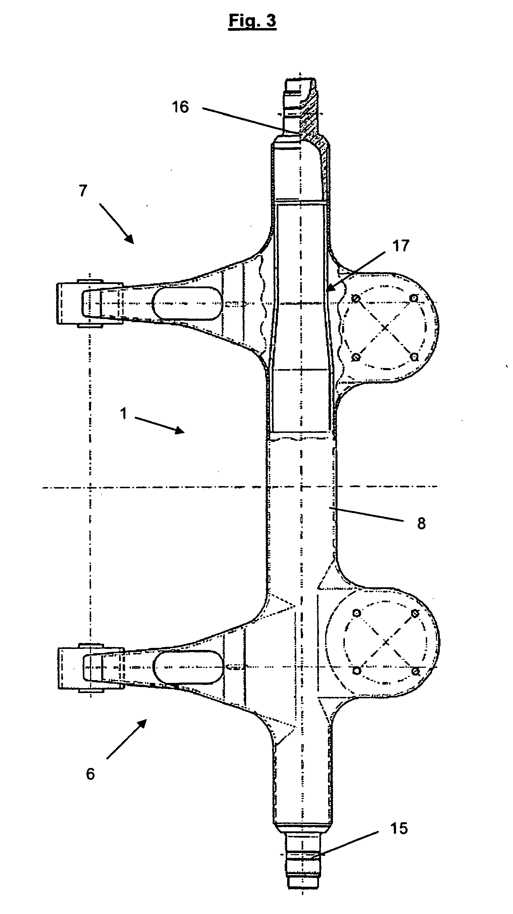

In Fig. 3 ist eine zweite Ausführungsform der Erfindung dargestellt, welche im Wesentlichen der Ausführungsform nach den Fig. 1 und 2 entspricht. Bei dieser Ausführungsform sind die seitlich in das Achsrohr 8 eingesetzten Achsstummel 15, 16 jedoch nicht verlängert, sondern mit herkömmlicher Länge ausgebildet und in dem Achsrohr 8 verschweißt und/oder verklemmt. Zur Versteifung des Verbindungsbereiches zwischen den Führungslenkern 6, 7 und dem Achsrohr 8 ist ein bereichsweise konisches Rohr 17 in dem Achsrohr 8 als Versteifungselement vorgesehen.

Das bereichsweise konische Rohr 17 erstreckt sich dabei von einem an den Befestigungsbereich der Achsstummel 15, 16 angrenzenden seitlichen äußeren Bereich mit kleinerem Durchmesser bis zu einem zwischen den beiden Führungslenkern 6, 7 gelegenen mittleren Bereich des Achsrohres 8 mit einem aus Stabilitätsgründen vergrößerten Durchmesser. Die im Betrieb hoch beanspruchte Zone, in welcher die beiden Führungslenker 6, 7 in das Achsrohr 8 münden, wird durch das Versteifungselement 17 zusätzlich verstärkt. Die übrigen Bereiche des aus den beiden Formteilhälften 2, 3 gebildeten Achsaggregates 1 können dagegen aus einem vergleichsweise dünnen Blech gebildet sein, so dass das Achsaggregat 1 bei hoher Steifigkeit ein besonders geringes Gewicht hat.

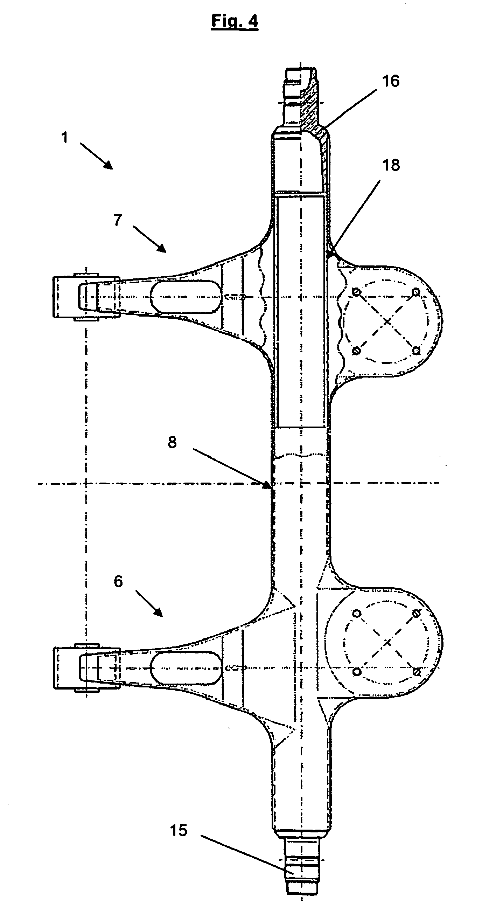

Die in Fig. 4 dargestellte Ausführungsform eines Achsaggregats 1 entspricht im Wesentlichen der Ausführungsform nach Fig. 3, wobei der zwischen den beiden Führungslenkern 6, 7 gelegene mittlere Bereich des Achsrohres 8 gegenüber dem seitlich außerhalb der beiden Führungslenker 6, 7 gelegenen Bereich keinen vergrößerten Durchmesser aufweist. Das als Versteifungselement 18 in dem Achsrohr 8 aufgenommene Rohr 18 kann daher beispielsweise zylindrisch ausgebildet sein. Das zylindrische Rohr 18 erstreckt sich dabei wiederum zwischen einem an die Achsstummel 15 bzw. 16 angrenzenden Bereich über den Verbindungsbereich des Achsrohres 8 mit den beiden Führungslenkern 6, 7 hinaus in einen mittleren Bereich des Achskörpers 8. Das zylindrische Rohr 18 kann wie auch das in Fig. 3 gezeigte konische Rohr 17 in dem Achsrohr 8 festgeklemmt, festgeschweißt oder in anderer geeigneter Weise befestigt sein.

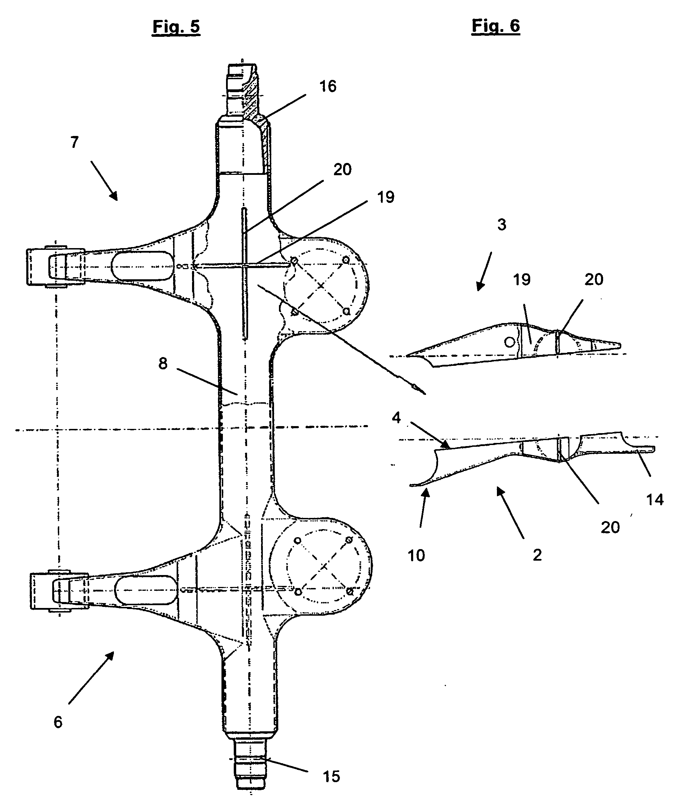

In der in den Fig. 5 und 6 dargestellten Ausführungsform sind als Versteifungselemente Rippen 19, 20 vorgesehen, welche sich im Inneren des durch die beiden Formteilhälften 2, 3 gebildeten Hohlraums erstrecken. Dabei ist jeweils eine Rippe 19 derart angeordnet, dass sie sich zumindest näherungsweise in einer Ebene mit der Längsachse des vorderen Endes 9 bzw. 10 des jeweiligen Führungslenkers 6, 7 erstreckt. Eine jeweils zweite Rippe 20 verläuft im Wesentlichen rechtwinklig hierzu in einer Ebene der Achse des Achsrohres 8. Die Länge der Rippen 19, 20 ist dabei derart bemessen, dass sie sich im Wesentlichen in dem Verbindungsbereich zwischen den beiden Führungslenkern 6, 7 und dem Achsrohr 8 erstrecken.

Die beiden Rippen 19, 20 sind derart in den beiden Formteilhälften 2, 3 vorgesehen, dass sie ausgehend von den Formteilhälften 2, 3 im Wesentlichen in der Ebene der Trennfuge 4 enden. Auf diese Weise ist es möglich, die Rippen der jeweiligen Formteilhälften miteinander zu verbinden, wenn die beiden Formteilhälften miteinander verbunden werden. Alternativ hierzu ist es jedoch auch möglich, die Rippen vorher oder nachher miteinander zu verschweißen oder durchgehende Rippen vorzusehen, welche sich von einer Formteilhälfte ausgehend bis in die andere Formteilhälfte hinein erstrecken.

Die Größe und Anordnung der Rippen 19, 20 ist dabei nicht auf die in den Fig. 5 und 6 gezeigte Ausführungsform beschränkt. Vielmehr ist es auch möglich, beispielsweise eine größere Anzahl von Rippen in dem Verbindungsbereich zwischen den Führungslenkern 6, 7 und dem Achsrohr 8 vorzusehen.

### Bezugszeichenliste

- 1: Achsaggregat
- 2: untere Formteilhälfte
- 3: obere Formteilhälfte
- 4: Trennfuge
- 5: Schweißung
- 6: Führungslenker
- 7: Führungslenker
- 8: Achskörper (Achsrohr)
- 9: vorderes Ende des Führungslenkers 6
- 10: vorderes Ende des Führungslenkers 7
- 11: Lagermuffe
- 12: Lagermuffe
- 13: hinteres Ende des Führungslenkers 6
- 14: hinteres Ende des Führungslenkers 7
- 15: Achsstummel
- 16: Achsstummel
- 17: konisches Rohr
- 18: zylindrisches Rohr
- 19: Rippe
- 20: Rippe
- 21: Lagerelement

- F: Fahrtrichtung

## Patentansprüche

1. Achsaggregat mit einer einen starren z. B. als Achsrohr (8) ausgebildeten Achskörper aufweisenden Fahrzeugachse, mit je einem Führungslenker (6, 7) beidseits der Fahrzeuglängsmittelebene, welcher an einem ersten vorderen Ende (9, 10) an einem chassisfesten Lagerpunkt anlenkbar und davon beabstandet starr mit dem Achskörper (8) verbunden ist, und welcher im Bereich seines dem vorderen Ende (9, 10) gegenüberliegenden hinteren Endes (17, 18) das untere Auflager eines Federelements bildet, auf dessen Oberseite sich das Fahrzeugchassis abstützt, wobei der Achskörper (8) und die beiden Führungslenker (6, 7) gemeinsam aus zwei jeweils im Wesentlichen einstückigen und miteinander entlang einer z.B. im Wesentlichen horizontalen Ebene verlaufenden Trennfuge (4) verbundenen, insbesondere verschweißten, Formteilhälften (2, 3) gebildet sind, so dass der Achskörper (8) die beiden Führungslenker (6, 7) starr miteinander verbindet, **dadurch gekennzeichnet, dass** der Achskörper (8) zumindest in den Verbindungsbereichen des Achskörpers (8) mit den beiden Führungslenkern (6, 7) durch wenigstens ein zusätzliches Versteifungselement (15, 16; 17; 18; 19, 20) versteift ist.

2. Achsaggregat nach Anspruch 1, **dadurch gekennzeichnet, dass** das wenigstens eine Versteifungselement durch ein Rohr (15, 16; 17; 18) gebildet ist, welches in einen durch die beiden Formteilhälften (2, 3) gebildeten Hohlraum eingesteckt ist.

3. Achsaggregat nach Anspruch 2, **dadurch gekennzeichnet, dass** das Rohr (15, 16; 18) ein zylindrisches Rohr ist.

4. Achsaggregat nach Anspruch 2, **dadurch gekennzeichnet, dass** das Rohr (17) ein sich von der Außenseite des Achsrohres (8) in Richtung zu der Mitte des Achsrohres (8) zumindest bereichsweise konisch aufweitendes Rohr ist.

5. Achsaggregat nach einem der Ansprüche 1 bis 4, **dadurch gekennzeichnet, dass** das wenigstens eine Versteifungselement (15, 16) durch eine rohrartige Verlängerung der Achsstummel (15, 16) gebildet ist.

6. Achsaggregat nach einem der Ansprüche 1 bis 5, **dadurch gekennzeichnet, dass** das wenigstens eine Versteifungselement (15, 16; 17; 18; 19, 20) zumindest bereichsweise flächig an der Innenwand der beiden Formteilhälften (2, 3) anliegt.

7. Achsaggregat nach einem der Ansprüche 1 bis 6, **dadurch gekennzeichnet, dass** das wenigstens eine Versteifungselement (15, 16; 17; 18; 19, 20) zumindest bereichsweise mit den beiden Formteilhälften (2, 3) verschweißt ist.

8. Achsaggregat nach einem der Ansprüche 1 bis 6, **dadurch gekennzeichnet, dass** der seitliche Endabschnitt des Achsrohres (8) innen zylindrisch ausgebildet, das insbesondere als Achsstummel (15, 16) ausgebildete Versteifungselement mit einem außen entsprechend zylindrischen Verbindungsabschnitt in den Endabschnitt des Achsrohres (8) eingepasst und der Endabschnitt des Achsrohres (8) mit dem Verbindungsabschnitt des Versteifungselements mittels wenigstens eines Klemmstücks, welches mittels eines Gewindebolzens in axialer Richtung zum Ende des Achsrohres (8) verstellbar ist, radial verspannbar ist.

9. Achsaggregat nach einem der Ansprüche 1 bis 6, **dadurch gekennzeichnet, dass** der seitliche Endabschnitt des Achsrohres (8) innen zylindrisch und mit wenigstens einem Längsschlitz ausgebildet, das insbesondere als Achsstummel (15, 16) ausgebildete Versteifungselement mit einem außen entsprechend zylindrischen Verbindungsabschnitt in den Endabschnitt des Achsrohres (8) eingepasst und der Endabschnitt des Achsrohres (8) mit dem Verbindungsabschnitt des Versteifungselements mittels wenigstens eines auf dem Endabschnitt des Achsrohres (8) sitzenden, in Längsrichtung durchgehend geschlitzten Spannringes radial verspannbar ist.

10. Achsaggregat nach Anspruch 1, **dadurch gekennzeichnet, dass** das wenigstens eine Versteifungselement durch wenigstens eine Rippe (19, 20) gebildet ist, welche in einem durch die beiden Formteilhälften (2, 3) gebildeten Hohlraum angeordnet und insbesondere mit den Formteilhälften (2, 3) verschweißt ist.

11. Achsaggregat nach Anspruch 10, **dadurch gekennzeichnet, dass** wenigstens zwei Versteifungselemente (19, 20) vorgesehen sind, die jeweils durch wenigstens zwei zumindest näherungsweise rechtwinklig zueinander verlaufende Rippen (19, 20) gebildet sind.

12. Achsaggregat nach Anspruch 10 oder 11, **dadurch gekennzeichnet, dass** eine der Rippen (19) zumindest näherungsweise in einer Ebene mit der Längsachse eines Führungslenkers (6, 7) und eine weitere Rippe (20) zumindest näherungsweise in einer Ebene mit der Achse des Achsrohres (8) liegt.

## Claims

1. Axle unit with a vehicle axle having a rigid axle body, e.g., one formed as an axle tube (8), with a radius arm (6, 7) on either side of the vehicle's longitudinal midplane, which can be linked at a first front end (9, 10) to a bearing point fixed to the chassis and is joined rigidly to the axle body (8) at a distance away from that point, and which forms the lower support of a spring element in the region of its rear end (17, 18), opposite the front end (9, 10), on top of which the vehicle chassis rests, while the axle body (8) and the two radius arms (6, 7) are formed jointly from two shaped part halves (2, 3) which are essentially single-piece and joined together, particularly by welding, along a joint (4) running in the essentially horizontal plane, for example, so that the axle body (8) rigidly joins together the two radius arms (6, 7), **characterized in that** the axle body (8) is stiffened by at least one extra stiffening element (15, 16; 17; 18; 19, 20) at least in the junction regions of the axle body (8) with the two radius arms (6, 7).

2. Axle unit per claim 1, **characterized in that** the at least one stiffening element is formed by a tube (15, 16; 17; 18), which is inserted into a cavity formed by the two shaped part halves (2, 3).

3. Axle unit per claim 2, **characterized in that** the tube (15, 16; 18) is a cylindrical tube.

4. Axle unit per claim 2, **characterized in that** the tube (17) is a tube which widens conically at least partly from the outside of the axle tube (8) in the direction of the middle of the axle tube (8).

5. Axle unit per one of claims 1 to 4, **characterized in that** the at least one stiffening element (15, 16) is formed by a tubular elongation of the stub axles (15, 16).

6. Axle unit per one of claims 1 to 5, **characterized in that** the at least one stiffening element (15, 16; 17; 18; 19, 20) lies at least partly in sheetlike manner against the inner wall of the two shaped part halves (2, 3).

7. Axle unit per one of claims 1 to 6, **characterized in that** the at least one stiffening element (15, 16; 17; 18; 19, 20) is at least partly welded to the two shaped part halves (2, 3).

8. Axle unit per one of claims 1 to 6, **characterized in that** the lateral end segment of the axle tube (8) is configured to be cylindrical on the inside, the stiffening element configured in particular as a stub axle (15, 16) is fitted by a corresponding outwardly cylindrical connection segment into the end segment of the axle tube (8), and the end segment of the axle tube (8) can be radially braced against the connection segment of the stiffening element by means of at least one clamping piece, which can be adjusted by means of a threaded bolt in the axial direction toward the end of the axle tube (8).

9. Axle unit per one of claims 1 to 6, **characterized in that** the lateral end segment of the axle tube (8) is configured cylindrical on the inside and with at least one longitudinal slit, the stiffening element configured in particular as a stub axle (15, 16) is fitted by a corresponding outwardly cylindrical connection segment into the end segment of the axle tube (8) and the end segment of the axle tube (8) is radially braced against the connection segment of the stiffening element by means of at least one clamping ring seated on the end segment of the axle tube (8) and slit continuously in the lengthwise direction.

10. Axle unit per claim 1, **characterized in that** the at least one stiffening element is formed by a rib (19, 20), which is arranged in a cavity formed by the two shaped part halves (2, 3) and welded in particular to the shaped part halves (2, 3).

11. Axle unit per claim 10, **characterized in that** at least two stiffening elements (19, 20) are provided, each of them formed by at least two ribs (19, 20) running at least approximately perpendicular to each other.

12. Axle unit per claim 10 or 11, **characterized in that** one of the ribs (19) lies at least approximately in a plane with the longitudinal axis of a radius arm (6, 7) and another rib (20) lies at least approximately in a plane with the axis of the axle tube (8).

## Revendications

1. Ensemble formant essieu comprenant un essieu de véhicule qui présente un corps d'essieu rigide, réalisé par exemple sous forme de tube d'essieu (8), comprenant un bras de guidage respectif (6, 7) de part et d'autre du plan médian longitudinal du véhicule, ledit bras étant relié à une première extrémité antérieure (9, 10) de façon articulée à un point de montage fixe par rapport au châssis et relié à distance de celui-ci de façon rigide avec le corps d'essieu (8), et soutenant, dans la région de son extrémité postérieure (17, 18), opposée à l'extrémité antérieure (9, 10), laquelle forme l'appui inférieur d'un élément à ressort, le châssis du véhicule sur sa face supérieure, dans lequel le corps d'essieu (8) et les deux bras de guidage (6, 7) sont formés conjointement de deux moitiés moulées (2, 3) reliées, en particulier soudées, sensiblement d'un seul tenant et l'une à l'autre le long d'une jointure de séparation (4) qui s'étend le long d'un plan, par exemple sensiblement horizontal, de sorte que le corps d'essieu (8) relie les deux bras de guidage (6, 7) rigidement l'un avec l'autre, **caractérisé en ce que** le corps d'essieu (8) est rigidifié par au moins un élément de rigidification supplémentaire (15, 16 ; 17 ; 18 ; 19, 20), au moins dans les zones de liaison du corps d'essieu (8) avec les deux bras de guidage (6, 7).

2. Ensemble formant essieu selon la revendication 1, **caractérisé en ce que** ledit au moins un élément de rigidification est formé par un tube (15, 16 ; 17 ; 18) qui est enfiché dans une cavité formée par les deux moitiés moulées (2, 3).

3. Ensemble formant essieu selon la revendication 2, **caractérisé en ce que** le tube (15, 16 20,18) est un tube cylindrique.

4. Ensemble formant essieu selon la revendication 2, **caractérisé en ce que** le tube (17) est un tube qui s'élargit de manière conique au moins localement depuis le côté extérieur du tube d'essieu (8) en direction du milieu du tube d'essieu (8).

5. Ensemble formant essieu selon l'une des revendications 1 à 4, **caractérisé en ce que** ledit au moins un élément de rigidification (15, 16) est formé par un prolongement tubulaire du moignon d'essieu (15, 16).

6. Ensemble formant essieu selon l'une des revendications 1 à 5, **caractérisé en ce que** ledit au moins un élément de rigidification (15, 16 ; 17 ; 18 ; 19, 20) s'applique au moins localement à plat contre la paroi intérieure des deux moitiés moulées (2, 3).

7. Ensemble formant essieu selon l'une des revendications 1 à 6, **caractérisé en ce que** ledit au moins un élément de rigidification (15, 16 ; 17 ; 18 ; 19, 20) est soudé au moins localement avec les deux moitiés moulées (2, 3).

8. Ensemble formant essieu selon l'une des revendications 1 à 6, **caractérisé en ce que** le tronçon terminal latéral du tube d'essieu (8) est réalisé intérieurement cylindrique, l'élément de rigidification, réalisé en particulier sous forme de moignon d'essieu (15, 16) est ajusté dans le tronçon terminal du tube d'essieu (8), par un tronçon de liaison cylindrique extérieurement correspondant, et le tronçon terminal du tube d'essieu (8) est susceptible être serré radialement avec le tronçon de liaison de l'élément de rigidification au moyen d'une pièce de serrage, laquelle est réglable au moyen d'un goujon fileté en direction axiale vers l'extrémité du tube d'essieu (8).

9. Ensemble formant essieu selon l'une des revendications 1 à 6, **caractérisé en ce que** le tronçon terminal latéral du tube d'essieu (8) est réalisé intérieurement cylindrique et avec au moins une fente longitudinale, l'élément de rigidification, réalisé en particulier sous forme de moignon d'essieu (15, 16), est ajusté dans le tronçon terminal du tube d'essieu (8), par un tronçon de liaison cylindrique extérieurement correspondant, et le tronçon terminal du tube d'essieu (8) est susceptible d'être serré radialement avec le tronçon de liaison de l'élément de rigidification au moyen d'une bague de serrage engagée sur le tronçon terminal du tube d'essieu (8) et fendue en continu en direction longitudinale.

10. Ensemble formant essieu selon la revendication 1, **caractérisé en ce que** ledit au moins un élément de rigidification est formé par au moins une nervure (19, 20), laquelle est agencée dans une cavité formée par les deux moitiés moulées (2, 3), et en particulier soudé avec les moitiés moulées (2, 3).

11. Ensemble formant essieu selon la revendication 10, **caractérisé en ce qu'**il est prévu au moins deux éléments de rigidification (19, 20) qui sont respectivement formés par au moins deux nervures (19, 20) qui s'étendent au moins approximativement à angle droit l'une par rapport à l'autre.

12. Ensemble formant essieu selon la revendication 10 ou 11, **caractérisé en ce que** l'une des nervures (19) est au moins approximativement dans un plan avec l'axe longitudinal d'un bras de guidage (6, 7), et une autre nervure (20) est au moins approximativement dans un plan avec l'axe du tube d'essieu (8).
